# EUROPEAN PATENT APPLICATION

(11) **EP 3 319 019 A1**
(43) Date of publication of application: **09.05.2018**
(21) Application number: 16821320.5
(22) Date of filing: 01.07.2016
(51) Int. Cl.: G06Q 10/02, G06F 3/048

(54) **QUEUE MANAGEMENT SYSTEM AND RECORDING MEDIUM CONTAINING QUEUE MANAGEMENT PROGRAM**

(30) Priority: 03.07.2015 JP 2015134633
(71) Applicant: Recruit Holdings Co., Ltd., Tokyo 104-0061 (JP)
(72) Inventor: WATASE, Takehiro, Tokyo 100-6640 (JP); SHINTANI, Akinori, Tokyo 100-6640 (JP)
(74) Representative: EIP
(86) International application number: PCT/JP2016/069608
(87) International publication number: WO 2017/006851

(57) **Abstract**

By a scroll operation, at a lower part of a waiting list L1, customers of reception numbers "9"-"11" not displayed in Figure 4A are displayed. At an upper part of the waiting list L1, an arousing alert AT1 ("there are customers waiting above" or the like) is displayed such that it is recognized that there are customers (specifically, the customers of reception numbers "1"-"3") who are hidden outside the screen and are invisible.

## Description

### Cross Reference to Related Application

This application is based upon Japanese Patent Application No. 2015-134633 filed on July 3, 2015, and the contents of which are incorporated herein by reference.

### Technical Field

The present disclosure relates to a technology of managing turn waiting.

### Background Art

Conventionally, in a restaurant, a bank, a public office or the like, various turn management systems are adopted in order to arrange turns of visitors waiting for the services.

For example, in a popular restaurant or the like, by preparing a reservation form specified by the restaurant and writing a name of a person making a reservation and the number of persons there, turns of customers are managed (for example, see Patent Literature 1 (in particular, paragraphs 0003-0007)).

However, in such a turn management method using a reservation form, management is performed mainly by a worker directly entering a visitor list on a reservation form specified by a store or a visitor writing a name and the number of persons there by himself/herself, and there is a problem that work burdens on a store side or burdens on the visitor or the like are large. Further, the worker needs to cope with a question such as how long the visitor is to wait, and it is one of the jobs that take time and labor on the store side.

In consideration of the circumstances a method is proposed in which a turn management terminal including a ticket machine is installed in a restaurant, a bank or a public office or the like (hereinafter, generically referred to as "facility" appropriately) and work burdens on a store side and burdens on a visitor or the like are reduced. A touch panel is loaded on a display of the turn management terminal, and display and input can be performed in a same area. Therefore, the worker and the visitor can perform a reservation operation of turn waiting by an intuitive operation as if writing on an exclusive reservation form.

### Citation List

### Patent Literature

Patent Literature 1: Japanese Patent Laid-Open No. 2004-94380

### Summary of Invention

### Technical Problem

However, in such a turn management terminal, in order to perform display in a conspicuous character and object size, in a display of a limited area, a scroll operation needs to be performed in a state of displaying a part of the display. Even though a display area can be moved in an arbitrary direction (for example, up and down) by the scroll operation, at what position in the entire page of a display target a displayed area is sometimes mistaken.

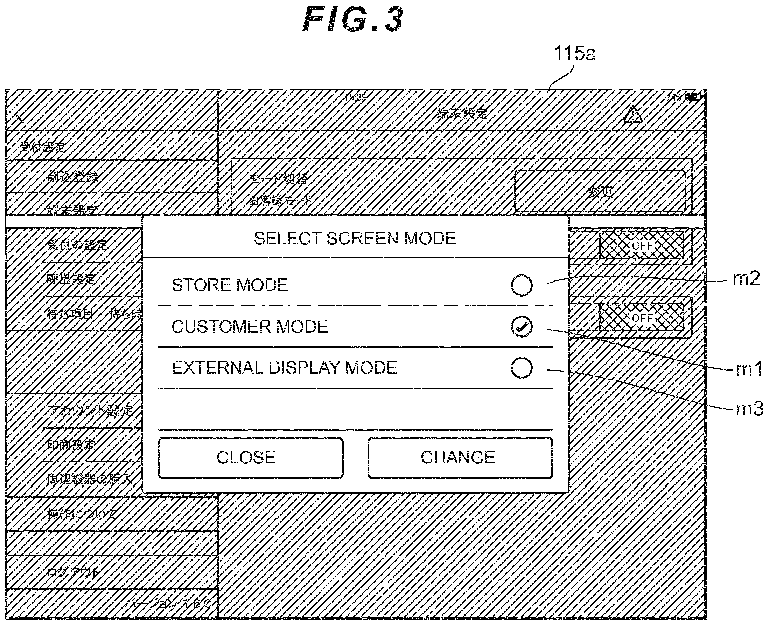

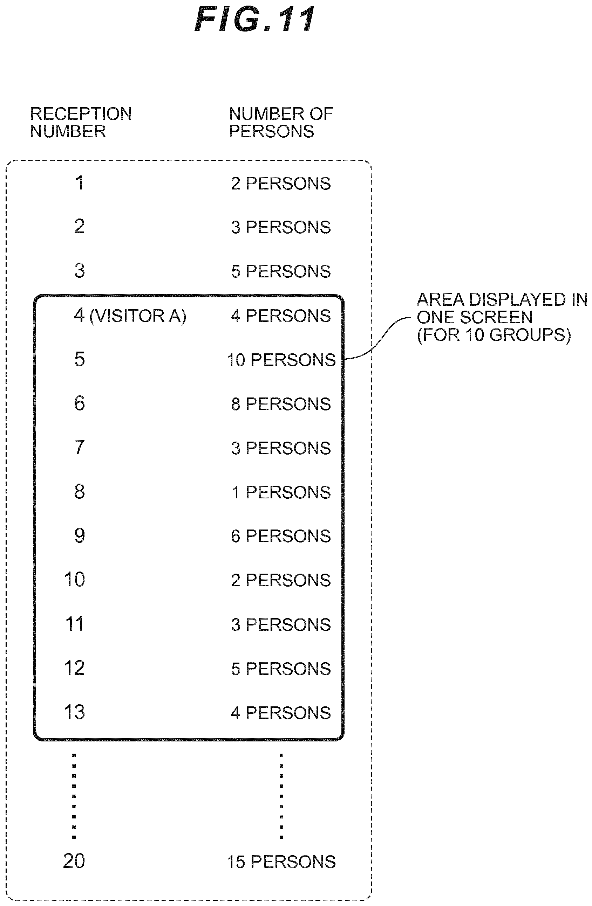

For example, as illustrated in Figure 11, in a display capable of displaying 10 groups of visitors on one screen, 10 groups of visitors of reservation numbers "4"-"13" are sometimes displayed on one screen in the state before the scroll operation is performed. As illustrated in Figure 11, 3 groups of visitors of reservation numbers "1"-"3" are present before the visitor of the reservation number "4", but a visitor A sometimes mistakes that he/she (that is, the visitor A) is to be called next since his/her reservation number "4" is displayed at the top of the screen of turn waiting in the state that the scroll operation is not performed.

While the visitor feels huge stress with waiting for a long time for a turn, when waiting for a longer time is needed further due to such a mistake in the number of turn waiting, there is a concern that the visitor holds a bad impression on a facility from the stress.

The present invention is implemented in consideration of the circumstances described above, and one of objects is to provide a management technology capable of preventing an error of the number of turn waiting when performing a turn waiting management job utilizing a turn management system capable of receiving input of a scroll operation. The other objects will be clear by referring to the entire description.

### Solution to Problem

A turn management system which is one aspect of the present invention is the turn management system that manages turn waiting of a reservation in a facility, and includes: a display device for displaying a screen including at least a part of a waiting list; an input device that receives input of a scroll operation of the waiting list; a determination section that determines whether or not a user of a high priority order is to be hidden outside the screen by the scroll operation in a case that the scroll operation is inputted; and a display control section that displays an arousing alert in the case that the user of the high priority order is hidden outside the screen by the scroll operation.

Here, in the above-described configuration, an aspect may be such that the waiting list includes a status of each user waiting for a turn, and the determination section determines whether or not the user of the high priority order having a specific status is to be hidden outside the screen by the scroll operation.

In addition, in the above-described configuration, a preferable aspect is such that the arousing alert includes at least either one of a number of groups of users hidden outside the screen and reception numbers imparted to the users hidden outside the screen. Note that the above-described system is one aspect of the present invention, and the system of the present invention may be an arbitrary combination of the above-described components. In addition, a device, a method, a computer program and a recording medium or the like of the present invention also include a similar configuration.

### Advantageous Effects of Invention

According to the embodiment of the present invention, an error in the number of turn waiting can be prevented when performing a turn waiting management job utilizing a turn management system capable of receiving input of a scroll operation.

### Brief Description of Drawings

[Figure 1] Figure 1 is a diagram illustrating a schematic configuration of a turn management system 1000 relating to a first embodiment.
[Figure 2] Figure 2 is a block diagram illustrating a main configuration of a turn management terminal 100.
[Figure 3] Figure 3 is a diagram illustrating a reception screen displayed at the turn management terminal 100.
[Figure 4A] Figure 4A is a diagram illustrating a turn waiting display screen in a customer mode m1.
[Figure 4B] Figure 4B is a diagram illustrating a display screen when a waiting list L1 is scrolled in an upper direction.
[Figure 5] Figure 5 is a diagram illustrating an operation screen in a store mode m2.
[Figure 6A] Figure 6A is a diagram illustrating a turn waiting display screen in the store mode m2.
[Figure 6B] Figure 6B is a diagram illustrating a display screen when a waiting list L2 is scrolled in the upper direction.
[Figure 7] Figure 7 is a diagram illustrating an operation screen in the store mode m2.
[Figure 8] Figure 8 is a flowchart illustrating reporting processing of an arousing alert.
[Figure 9] Figure 9 is a diagram illustrating a schematic configuration of a turn management system 1000' relating to a second embodiment.
[Figure 10] Figure 10 is a sequence diagram in a case of managing a turn utilizing three turn management terminals 100A-100C.
[Figure 11] Figure 11 is a diagram for describing a problem of a scroll operation.

### Description of Embodiments

Hereinafter, the embodiments of the present invention will be described in details with reference to the drawings. Note that same signs are attached to same elements and redundant description is omitted.

### A. First embodiment

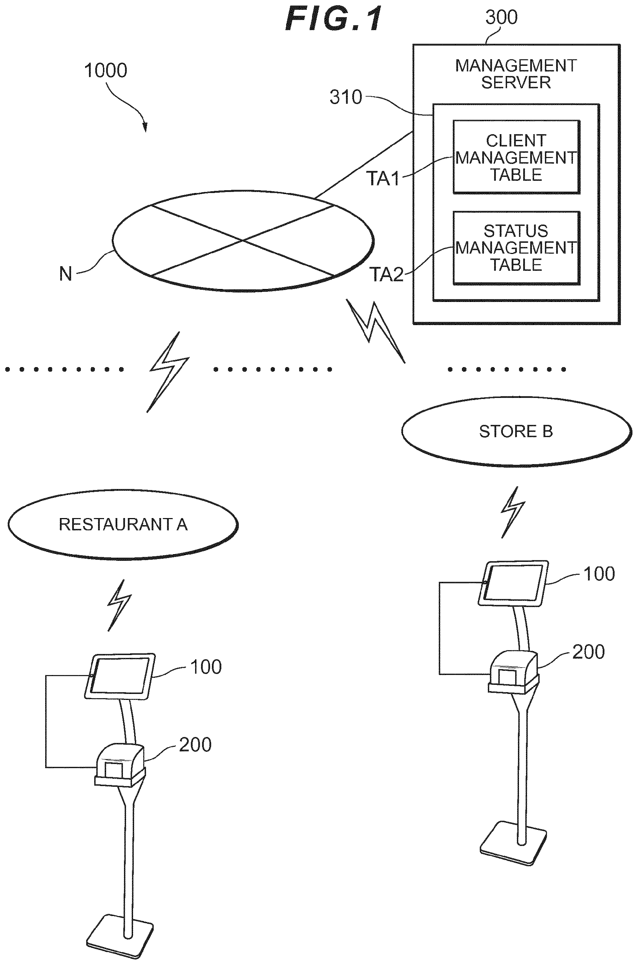

Figure 1 is a diagram illustrating a schematic configuration of a turn management system 1000 relating to the present embodiment. As illustrated in the figure, the turn management system 1000 is configured including turn management terminals 100 provided in facilities such as a restaurant, printers 200 connected to the turn management terminals 100, and a management server 300 that generally manages the turn management terminals 100 through a communication network N.

In the present embodiment, the case of managing turn waiting of visitors regarding a food service provided by a certain restaurant A is described as an example, but the present embodiment is not meant to be limited to the case and is applicable to all facilities that manage the turn waiting of visitors, such as stores of a composite amusement system, a shopping mall, a department store or the like, hospitals and public facilities. In addition, while the turn management terminal 100 installed in the restaurant A and the turn management terminal 100 installed in a store B are illustrated for convenience of description, the turn management terminals 100 installed in many facilities are managed by the management server 300.

The turn management terminal 100 is a terminal device installed near an entrance of a facility or the like for managing the turn waiting when a visitor enters the facility or receives a service, and a tablet terminal or the like is utilized. Target agents that provide services are the agents of all industry types/business categories. Of course, the turn management terminal 100 is not meant to be limited to the tablet terminal, and all terminal devices capable of giving and receiving data to/from the management server 300 through the communication network N, such as a personal computer (PC), a notebook PC, a smartphone, a cellular phone, or a personal digital assistant (PDA) can be utilized.

The printer 200 is connected with the turn management terminal 100 by a cable or radio, and issues a numbered ticket indicating the number of the turn waiting and a coupon or the like.

The management server 300 is configured by a computer with a high arithmetic processing capacity for example, and realizes a server function by a predetermined server program being operated in the computer. Here, the management server 300 is not necessarily configured by one computer, and may be configured by a plurality of computers distributed on the communication network N. The management server 300 includes a management database 310 for managing the turn management terminal 100 for respective facilities. The management database 310 includes a client management table TA1 and a status management table TA2.

In the client management table TA1, IDs and passcodes (accounts) intrinsic to the respective facilities are registered in correspondence. Here, "ID: A1..." and "passcode: AA2..." are set for the turn management terminal 100 utilized in "restaurant A". The IDs and passcodes for the respective facilities are set by managers (for example, owners of stores or the like) who manage the turn waiting in the individual facilities upon system introduction for example. Note that, in the present embodiment, the case of utilizing one turn management terminal 100 in one facility is assumed, but the plurality of turn management terminals 100 may be utilized in one facility (see a second embodiment). In the case of utilizing the plurality of turn management terminals 100 in one facility, the same ID and passcode may be utilized, but a plurality of IDs and passcodes may be discriminately used according to a predetermined condition for example.

In the status management table TA2, waiting lists in the individual facilities are registered. The waiting list includes a list of persons waiting for a turn, and information (status information) indicating each turn waiting situation (status). For the restaurant A, the number of groups with a reservation waiting for a turn is "1 group", reception time is "AM 11:11", and the number of persons with a reservation is "2 persons", or the like. Registered contents of the status management table TA2 are changed based on new registration information to the waiting list transmitted from the turn management terminal 100, or status update information (details are to be described later). Note that what kind of information is to be the status information can be appropriately set and changed by the managers of the individual facilities or the like.

The communication network N includes a communication network capable of transmitting and receiving information to/from each other between the management server 300 and the turn management terminal 100. The communication network N may be any of the Internet, a LAN, a private line, a telephone line, an intra-company network, a mobile communication network, Bluetooth (R), WiFi (Wireless Fidelity), other communication lines, or a combination thereof or the like, regardless of whether it is wired or wireless.

### <Turn management terminal 100>

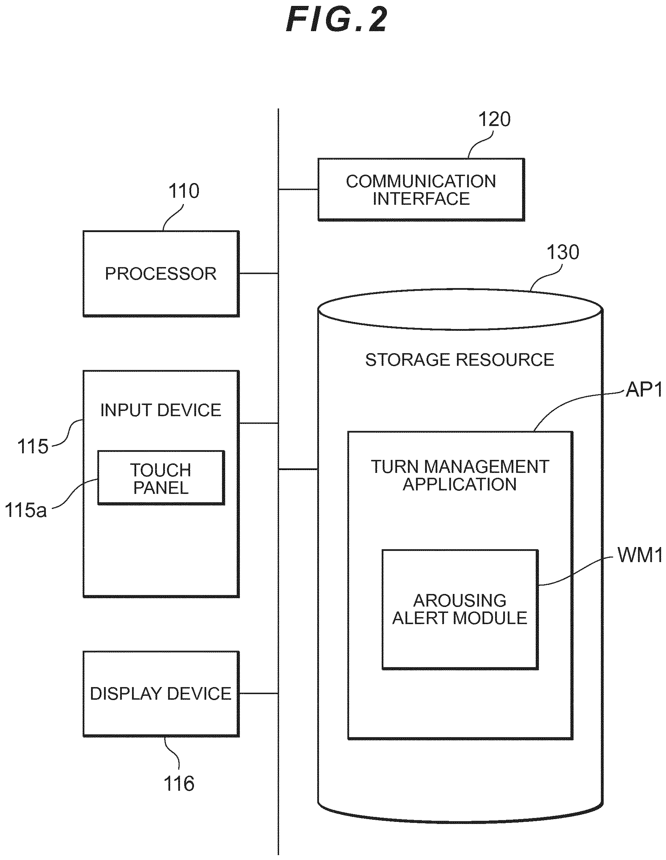

Figure 2 is a block diagram illustrating a main configuration of the turn management terminal 100. The turn management terminal 100 includes a processor 110, an input device 115, a display device 116, a communication interface 120, and a storage resource 130.

The processor 110 is configured from an arithmetic and logical operation unit (a CPU or the like) that processes an arithmetic operation, a logical operation and a bit operation or the like, and various kinds of registers, and centrally controls individual sections of the turn management terminal 100 by executing various kinds of programs stored in the storage resource 130.
The various kinds of registers are, for example, a program counter, a data register, an instruction register and a general purpose register or the like.

The input device 115 includes various kinds of operation buttons and a touch panel 115a for receiving an addition operation to the waiting list, an update operation of the waiting list, and a scroll operation of the waiting list further.

The display device 116 is a device for displaying a reception screen or various operation screens including the waiting list and a reception button or the like, and is configured by a liquid crystal display for example.

The communication interface 120 is connected to the communication network N and is a hardware module for communicating with the other terminals on the communication network N. The communication interface 120 is, for example, a modem such as an ISDN modem, an ADSL modem, a cable modem, an optical modem or a software modem.

The storage resource 130 is, for example, a logical device provided by a storage area of a physical device. The physical device is, for example, a computer-readable recording medium such as a disk drive or a semiconductor memory (a ROM, a RAM, or the like). The storage resource 130 may be constructed by mapping a plurality of physical devices to one logical device, or may be constructed by mapping one physical device to a plurality of logical devices.

In the storage resource 130, an operating system program, a driver program and various kinds of data or the like are stored. An example of the driver program is a communication interface driver program for controlling the communication interface 120 or the like. In addition, in the storage resource 130, in addition to the various kinds of programs and the various kinds of data, a computer program (referred to as "turn management application", hereinafter) AP1 for managing the turn waiting in cooperation with the management server 300 is stored. The turn management application AP1 illustratively includes an arousing alert module WM1.

Figure 3 is a diagram illustrating a mode switching screen displayed on the touch panel 115a.

As illustrated in Figure 3, in the present embodiment, three kinds of modes which are a customer mode m1, a store mode m2, and an external display mode m3 are prepared, and the modes can be switched.

A mode switching operation is performed by a manager or a worker (generally referred to as "the worker or the like", hereinafter) who knows the ID and the passcode of the facility. When the correct ID and passcode are inputted by the worker or the like and authentication is successful, by the turn management application AP1, the mode switching screen illustrated in Figure 3 is displayed at the turn management terminal 100. The worker or the like selects an optimum mode from the customer mode m1, the store mode m2 and the external display mode m3 by operating the touch panel 115a.

When the scroll operation is performed in the state that the customer mode m1 or the store mode m2 is set, the arousing alert module WM1 displays an arousing alert (to be described later) on the touch panel 115a according to the scroll operation.

### <Customer mode>

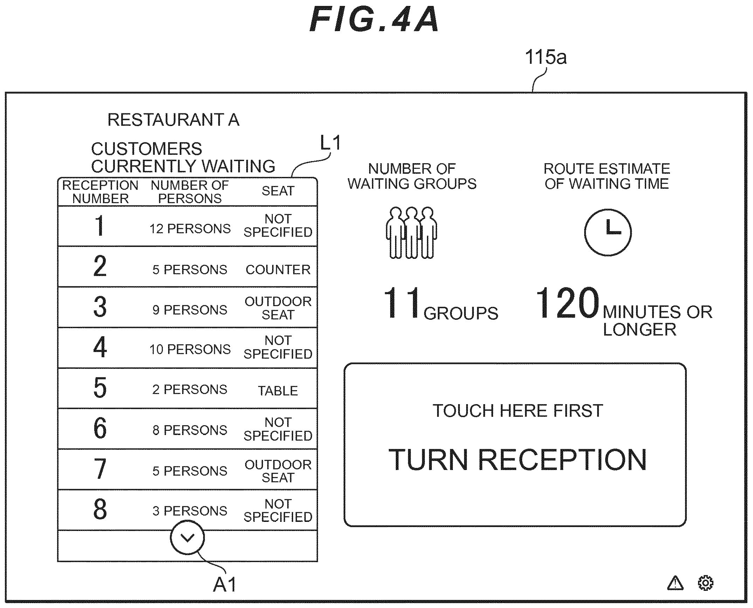

Figure 4A is a diagram illustrating a turn waiting display screen in the customer mode m1. The customer mode m1 is a mode capable of receiving only an input instruction of the turn waiting by the visitor (that is, the customer) directly operating the touch panel 115a.
As illustrated in Figure 4A, a reception number is imparted to the visitor in order from early reception.
In a left column, a waiting state (waiting list L1) of the customers is displayed, and the customers are arranged from the customer of a small reception number in order (that is, in an ascending order). Note that a downward arrow mark A1 means that there are the customers in a waiting state who cannot be displayed, and by touching the arrow mark A1 and performing the scroll operation in an upper direction, the customers in the waiting state who are hidden outside the screen and are invisible can be displayed. On the other hand, in a right column, the number of the customers in the waiting state (the number of waiting groups), a rough estimate of waiting time, and the operation button that receives the input of the turn waiting further are displayed. Note that, as described later, there are "3 groups" (specifically, reception numbers "9"-"11") of the customers not displayed in Figure 4A.

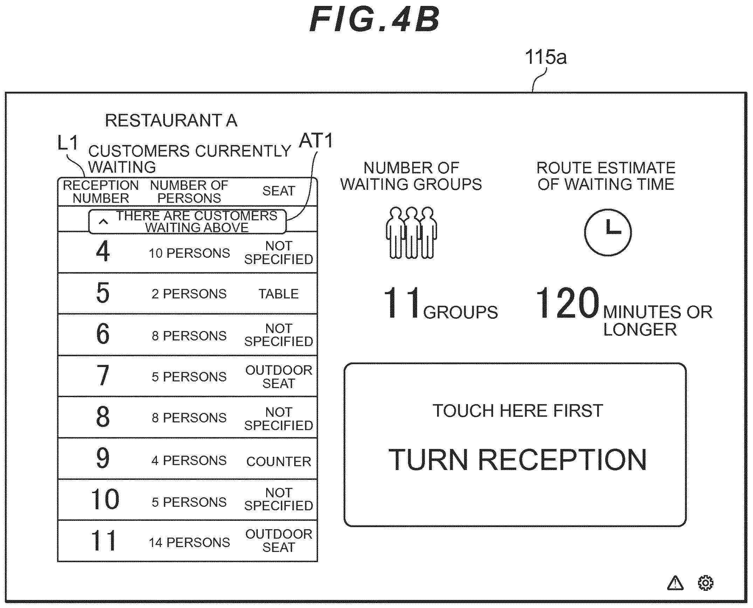

Figure 4B is a diagram illustrating a display screen when the waiting list L1 illustrated in Figure 4A is scrolled in the upper direction.

It is recognized that the customers of the reception numbers "9"-"11" not displayed in Figure 4A are displayed at a lower part of the waiting list L1 illustrated in Figure 4B. On the other hand, at an upper part of the waiting list L1, an arousing alert AT1 ("there are customers waiting above" or the like) is displayed such that it is recognized that there are the customers (specifically, the customers of reception numbers "1"-"3") who are hidden outside the screen and are invisible. Note that, in the present embodiment, the arousing alert AT1 is displayed when there is even one group of the customer is hidden above and is invisible, under what condition the arousing alert AT1 is to be displayed can be appropriately set/changed.

When the input of the turn waiting is ended, inputted information (that is, new reservation information) is uploaded from the turn management terminal 100 through the communication network N to the management server 300. When the new reservation information is received from a certain facility (here, the restaurant A), the management server 300 rewrites the status management table TA2 based on the received new reservation information, and updates the turn waiting situation (status) of the facility. Note that, in the present embodiment, it is assumed that the visitor directly operates the touch panel 115a in the customer mode m1, but the worker or the like may perform the input of the turn waiting instead of the visitor. Of course, it should be noted that, when utilization is performed in the customer mode m1, another turn management terminal 100 (specifically, the turn management terminal 100 set to the store mode m2) for updating a reservation situation is needed. Note that a function of the turn management terminal 100 set to the store mode m2 will be described in details below.

### <Store mode>

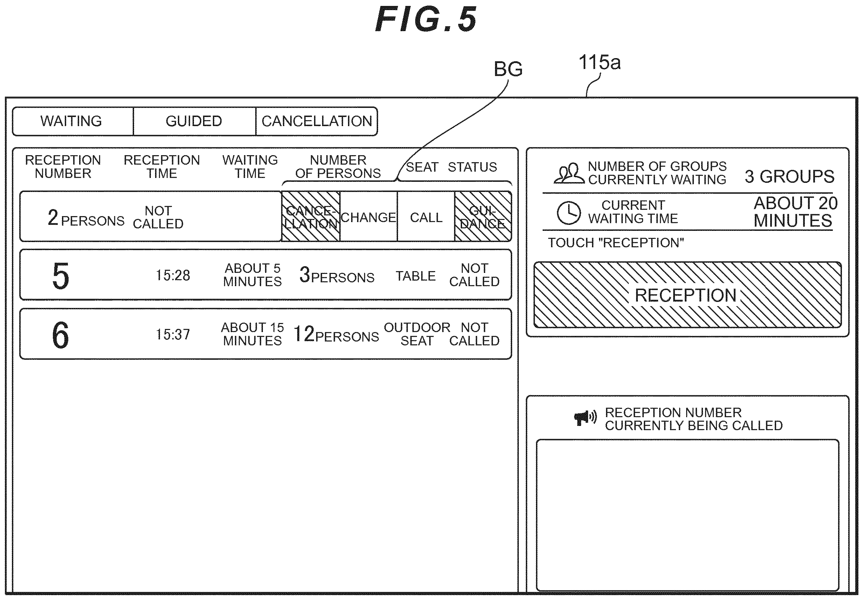

Figure 5 is a diagram illustrating an operation screen in the store mode m2.

The store mode m2 is a mode capable of receiving the input instruction of the turn waiting and also capable of receiving an update instruction of the turn waiting situation (status) by the worker or the like. As illustrated in Figure 5, as the update instruction (update operation) of the turn waiting situation, one of "cancellation", "change", "call" and "guidance" can be selected. "Cancellation" means to cancel the turn waiting, and "change" means to change once inputted details (the number of persons for the visitor or the like) of the turn waiting. In addition, "call" means to report to the visitor that the turn of the reservation has come by telephone or mail or the like, and "guidance" means to actually guide the visitor at his/her turn. In the present embodiment, for each reception number (that is, for all the reception), the update operation of the turn waiting situation can be performed. Describing one example, the worker or the like first specifies an update target of the turn waiting situation, and then swipes a row where the target is displayed from right to left. As a result, an operation button group BG indicating "cancellation", "change", "call" and "guidance" as illustrated in an upper left part of Figure 5 is displayed. The worker or the like performs the update operation of the turn waiting situation by tapping a desired operation button ("cancellation", for example).

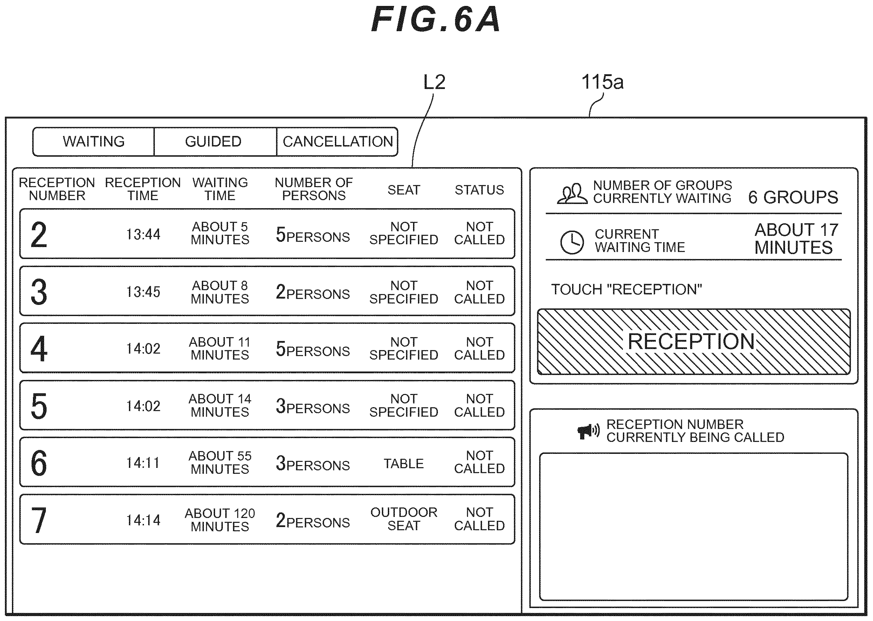

Figure 6A is a diagram illustrating a turn waiting display screen in the store mode m2.

As illustrated in Figure 6A, the reception number is imparted to the visitor in order from the early reception. In the left column, the waiting state (waiting list L2) of the customers is displayed, and the customers are arranged from the customer of the small reception number in order (that is, in the ascending order). The waiting list L2 in the store mode m2 is different from the waiting list L1 in the customer mode m1 in (1) a point that reception time, the waiting time and the status are displayed, and (2) a point that the arrow mark A1 is not displayed even when there is the customer (status: "not called") in the waiting state who cannot be displayed. Note that, in the store mode m2, in order to display the customer (status: "not called") in the waiting state who cannot be displayed, the worker or the like directly performs the scroll operation in the upper direction (to be described later). In addition, in Figure 6A, the status of all the customers in the waiting state is set to "not called" (that is, the state that calling is not yet performed to the visitor for whom the reception of the turn waiting is completed), but it may be understood that the status is to be appropriately updated according to the situation.

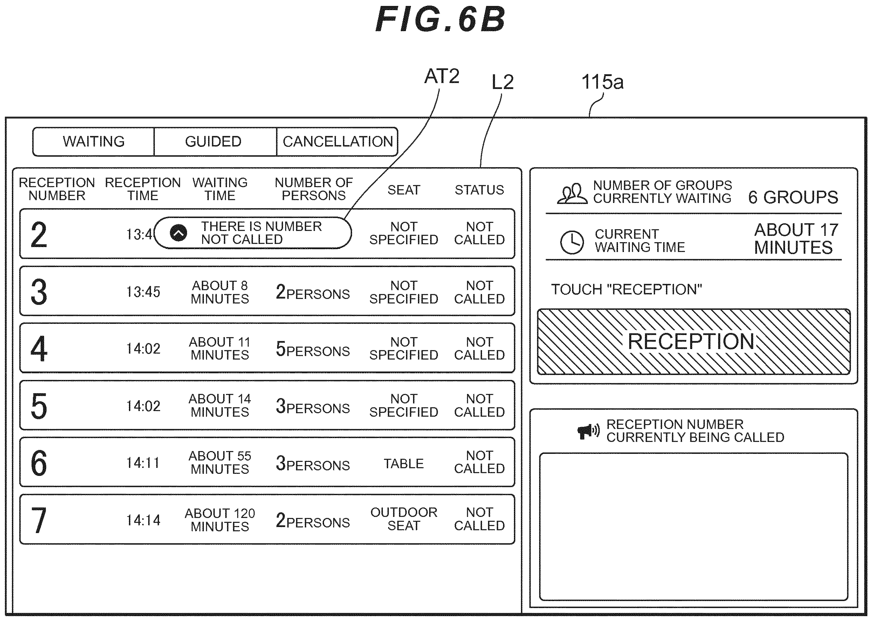

Figure 6B is a diagram illustrating a display screen when the waiting list L2 illustrated in Figure 6A is scrolled in the upper direction.

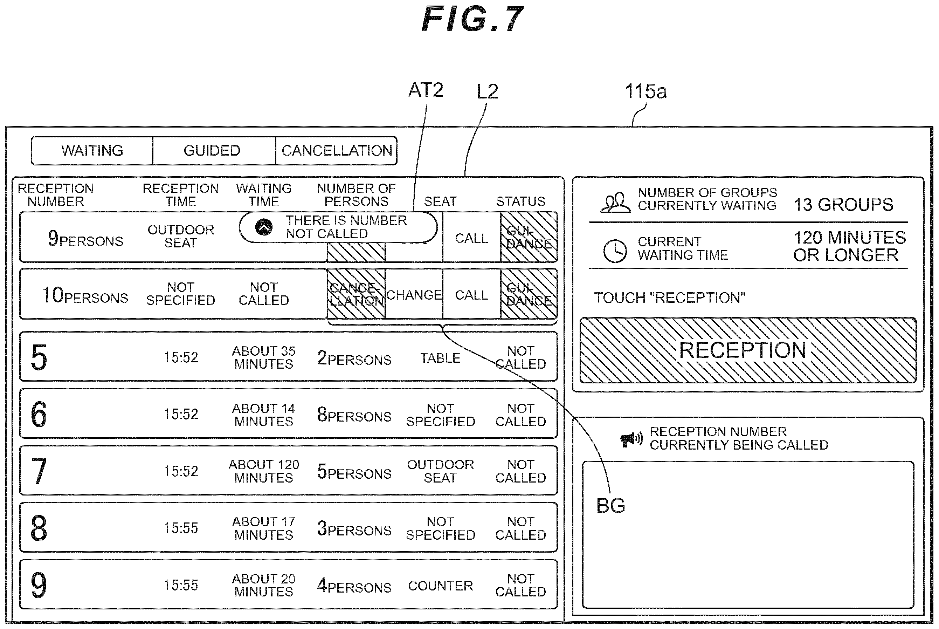

When the waiting list L2 is scrolled in the upper direction, the customer (status: "not called") of the reception number "2" displayed at the beginning (first row) is hidden outside the screen. At the upper part of the waiting list L2, an arousing alert AT2 ("there is number not called" or the like) is displayed such that the worker or the like surely recognizes that there is the customer (status: "not called") who is hidden outside the screen and is invisible. In this way, in the store mode m2, by displaying the arousing alert AT2, the customer of a high priority order who is not called is prevented from being overlooked. Of course, the customer of what status is to be a target of the arousing alert AT2 can be appropriately set and changed according to system design or the like. Note that, as illustrated in Figure 7, even in the state that there is the customer of the high priority order who is not called (there is the number not called), the update instruction of the turn waiting situation may be performed giving other customers priority (see the operation button group BG indicating "cancellation", "change", "call" and "guidance").

When the input is performed, the status update information indicating the update instruction of the turn waiting situation is uploaded from the turn management terminal 100 through the communication network N to the management server 300. The management server 300 rewrites the status management table TA2 based on the received status update information, and updates the turn waiting situation (status) of the facility. Note that the external display mode m3 is a mode for displaying the turn waiting situation on a large-sized display installed inside the facility or the like.

Hereinafter, reporting processing of the arousing alert executed in the customer mode m1 or the store mode m2 will be described. For convenience of the description, the case of executing the reporting processing of the arousing alert in the customer mode m1 will be described as an example, it is clear from the above description that the reporting processing of the arousing alert can be similarly executed also in the store mode m2.

### <Reporting processing of arousing alert>

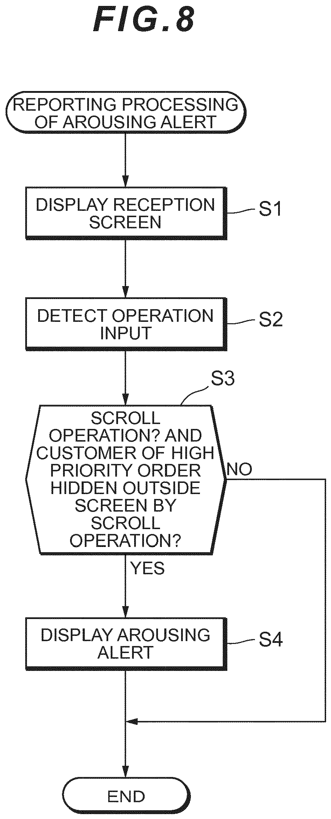

Figure 8 is a flowchart illustrating the reporting processing of the arousing alert executed by the turn management terminal 100.

The turn management terminal 100 is installed at the entrance of the facility or the like as described above, and makes the display device 116 display the reception screen for receiving the turn waiting as illustrated in Figure 4A (step S1).

When it is detected that operation input to the input device 115 such as the touch panel 115a by the visitor or the worker or the like is received to the displayed reception screen (step S2), the turn management terminal 100 discriminates whether or not the inputted operation is an operation needing the arousing alert AT1 (step S3). Describing in details, the turn management terminal (discrimination section) 100 discriminates whether or not the inputted operation is the scroll operation in the upper direction of the waiting list L1 illustrated in Figure 4A and is the operation of hiding the customer of the high priority order outside the screen by the scroll operation (step S3). For example, when it is detected that the operation of changing from Figure 4A to Figure 4B is performed, the turn management terminal 100 determines "YES" in step S3. As it is clear in comparison between Figure 4A and Figure 4B, while the customers of the reception numbers "9"-"11" who are not displayed in Figure 4A are displayed at the lower part of the waiting list L1 in Figure 4B, the customers of the reception numbers "1"-"3" displayed at the upper part of the waiting list L1 in Figure 4A are hidden outside the screen in Figure 4B. The turn management terminal (display control section) 100 displays the arousing alert AT1 at the upper part of the waiting list L1 such that it is recognized that there are the customers (the customers of the reception numbers "1"-"3", in Figure 4B) who are hidden outside the screen and are invisible (step S4), and ends the processing. Note that, in the case of determining "NO" in step S3 (for example, an input operation of the turn waiting or the like), the turn management terminal 100 skips step S4 and ends the processing.

As described above, according to the present embodiment, even when the customer of the high priority order appearing in the waiting list is hidden outside the screen by the scroll operation by the visitor or the worker or the like, since the arousing alert AT1 such as "there are customers waiting above" is displayed at the display device 116, the error of the number of the turn waiting by the visitor or the worker or the like can be prevented.

Note that, in the embodiment described above, a simple message such as "there are customers waiting above" is displayed as an example of the arousing alert AT1 in the customer mode m1, but the number of groups of the customers hidden outside the screen (for example "there are XX groups of customers") and the reception number ("reception numbers of customers waiting are X, Y...") or the like may be appropriately combined and displayed. Of course, it is not intended to limit the message to a character message, and a voice message may be utilized or a sound effect or the like may be utilized together with the character message.

In addition, in the embodiment described above, an aspect of displaying the arousing alert AT1 at the upper part of the waiting list L1 is illustrated, but being limited thereto, it may be at a lower part of the waiting list L1 or the like. In addition, the arousing alert AT1 may be moved in a predetermined track (or at random). Further, the arousing alert AT1 is not needed to be continuously displayed at all times while there are customers hidden outside the screen, and may be displayed only for a fixed period of time or displayed so as to be lighted (or flicker).

Further, in the embodiment described above, a simple message such as "there is number not called" is displayed in the case that the customer not called is hidden outside the screen as an example of the arousing alert AT2 in the store mode m2, but the number of groups of the customers not called who are hidden outside the screen and specific reception numbers or the like may be appropriately combined and displayed. In addition, in the present embodiment, an operation of the facility or the like is taken into consideration, and the case of displaying the arousing alert AT2 when the customer hidden outside the screen is the customer "not called" is illustrated, but in the case of what status the arousing alert AT2 is to be displayed can be arbitrarily set/changed. Furthermore, various kinds of application examples described in the arousing alert AT1 may be of course applied to the arousing alert AT2. Note that, though not mentioned in particular in the embodiment described above, a configuration of moving to a top stage of the waiting list L1 (L2) by a tapping operation of the arousing alert AT1 (AT2) may be adopted. By the configuration, since the customers registered in the waiting list L1 (L2) are displayed from the top stage in order (that is, in a descending order of the priority order), the error of the number of the turn waiting by the visitor or the worker or the like can be more surely prevented.

### B. Second embodiment

While the case of utilizing one turn management terminal 100 in one facility is described in the first embodiment described above, in the second embodiment, the case of utilizing the plurality of turn management terminals 100 in one facility will be described.

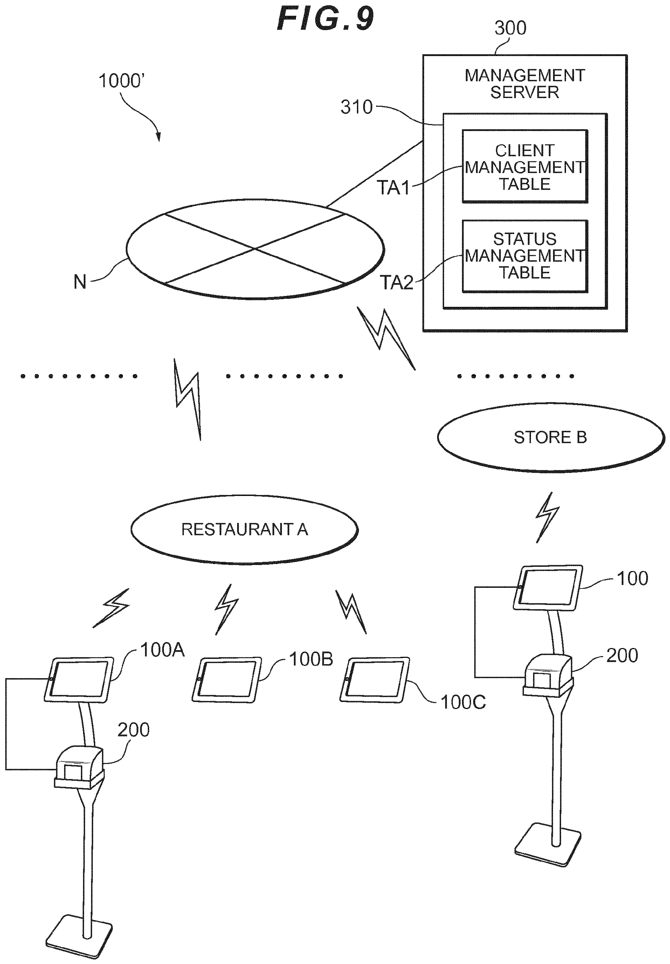

Figure 9 is a diagram illustrating a schematic configuration of a turn management system 1000' relating to the second embodiment. The turn management system 1000' illustrated in Figure 9 is similar to Figure 1 except for a point that the plurality of turn management terminals 100 are provided in one facility. Therefore, the same signs are attached to corresponding parts, and detailed description is omitted.

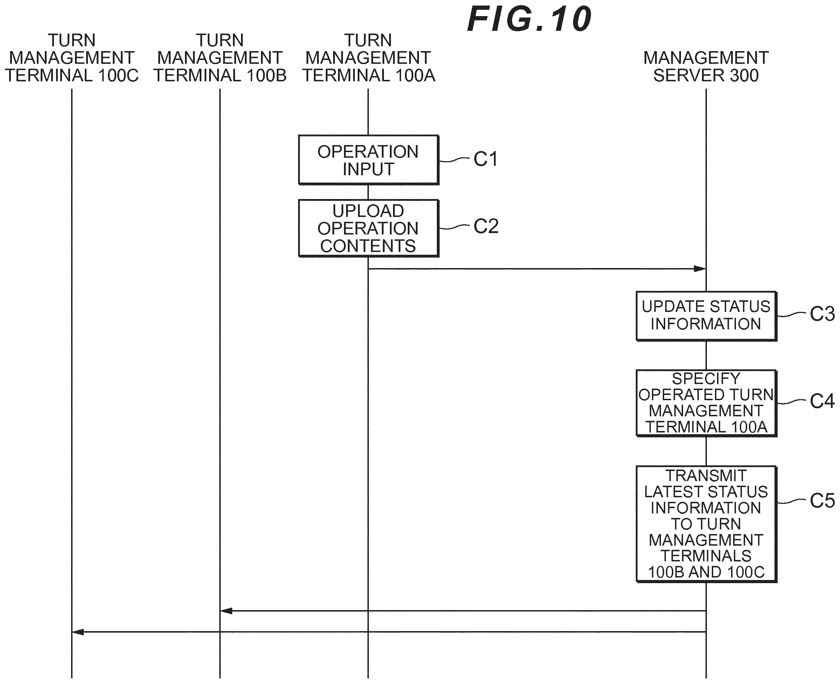

The case of utilizing the plurality of turn management terminals 100 in one facility is different from the case of utilizing only one turn management terminal 100 in a point that data is shared among the respective turn management terminals 100. Figure 10 is a sequence diagram in the case of managing the turn utilizing three turn management terminals 100A-100C. For example, when a specific turn management terminal 100 (the turn management terminal 100A illustrated in Figure 10) is operated in the restaurant A (C1), the operation contents (assuming the status update information, here) are uploaded to the management server 300 (C2). The management server 300 updates the status information of the restaurant A registered to the status management table TA2 based on the received status update information (C3). Then, the management server 300 refers to the client management table TA1, and specifies the turn management terminal 100 utilized in the restaurant A (C4). Here, since the three turn management terminals 100A-100C are registered in the client management table TA1 for the restaurant A, the management server 300 transmits updated latest status information to the terminals other than the turn management terminal 100A, that is, the turn management terminals 100B and 100C (C5), and ends the processing.

As a result, the latest information is reflected to the respective turn management terminals 100 in the state of being synchronized at all times, and thus, even in the case of utilizing the plurality of turn management terminals 100 in one facility, the turn waiting can be optically managed without generating a failure that the update information of the turn waiting is not reflected in some turn management terminal 100 or the like.

### C. Others

Note that the present invention is not limited to the embodiments described above, and can be implemented in other various forms without departing from the scope of the present invention. Therefore, the above-described embodiments are just examples in all respects, and should not be narrowly interpreted. For example, the order of respective processing steps described above can be arbitrarily changed without causing discrepancy in processing contents, or the processing steps can be executed in parallel.

While the system of managing the turn by cooperation of the turn management terminal 100 and the management server 300 is described in the embodiments described above, the configuration of the system is not limited thereto and various configurations can be adopted. For example, by providing the function that the management server 300 has on the side of the turn management terminal 100, a device having the function equal to that of the turn management system 1000 can be configured by the turn management terminal 100 alone.

Further, in the second embodiment, the turn management terminal 100A connected with the printer 200 can be installed near the entrance of the facility to be used as a terminal for reception by the visitor, while the turn management terminals 100B and 100C can be individually held by the worker or the like and used as terminals for status update. At the time, the turn management terminal 100A for the reception can receive only new registration of the turn waiting, and the turn management terminals 100B and 100C for the status update can receive both of the new registration of the turn waiting and the status update. Thus, the visitor can only register the turn waiting, and it is possible to prevent the visitor from erroneously performing the status update. Further, whether to make it possible to receive only the new registration of the turn waiting or to receive both of the new registration of the turn waiting and the status update in the turn management terminal 100 may be realized by switching a mode within a single application.

Even though the numbered ticket issued from the printer 200 is not mentioned in particular, efficiency of turn waiting management may be improved by utilizing QR codes (R). A person making a reservation performs the input of the turn waiting, and receives the numbered ticket issued from the printer 200. Thereafter, the person making a reservation reads the QR code printed on the numbered ticket by utilizing his/her own smartphone or the like. By reading the QR code, a current turn waiting situation (the current number of waiting persons or the like) is displayed on a liquid crystal panel of the smartphone or the like. Then, when his/her turn approaches, remind mail for calling arrives. Thus, the person can enter the store without lining up at a storefront for a long time, stress of an action of "waiting for a long time" can be reduced, and the time conventionally wasted by the action of "waiting" can be effectively utilized.

Note that, an example of a method of setting the remind mail is a method of displaying a message urging input of a mail address within a page when the QR code is read or the like (such as "Input mail address to receive notice below"). The visitor can receive the remind mail by inputting the mail address according to the message.

In addition, a phone call may be made instead of (or in addition to) the remind mail. After the input of the turn waiting is ended, a message to confirm the visitor whether to desire phone call setting is displayed at the turn management terminal 100 (such as "Phone call can be set. If you like, press button below and input phone number"). In the case of desiring the phone call setting, the visitor inputs a phone number according to the message. As a result, when his/her turn approaches, calling by automated voice or the like is performed, and it is possible to enter the store without lining up at the storefront for a long time.

The program for realizing the respective embodiments of the present invention described above may be stored in a recording medium. When the recording medium is used, the program can be installed to a computer for managing the turn waiting of the reservation in the facility. Here, the recording medium storing the program may be a non-transitory recording medium. The non-transitory recording medium is not limited in particular, but may be a recording medium such as a CD-ROM for example.

## Claims

1. A turn management system that manages turn waiting of a reservation in a facility, the turn management system comprising:
a display device for displaying a screen including at least a part of a waiting list;
an input device that receives input of a scroll operation of the waiting list;
a determination section that determines whether or not a user of a high priority order is to be hidden outside the screen by the scroll operation in a case that the scroll operation is inputted; and
a display control section that displays an arousing alert at the display device in the case that the user of the high priority order is hidden outside the screen by the scroll operation,
wherein the waiting list includes a status of each user waiting for a turn, and
wherein the determination section determines whether or not the user of the high priority order having a specific status is to be hidden outside the screen by the scroll operation.

2. A turn management system that manages turn waiting of a reservation in a facility, comprising:
a display device for displaying a screen including at least a part of a waiting list;
an input device that receives input of a scroll operation of the waiting list;
a determination section that determines whether or not a user of a high priority order is to be hidden outside the screen by the scroll operation in a case that the scroll operation is inputted; and
a display control section that displays an arousing alert at the display device in the case that the user of the high priority order is hidden outside the screen by the scroll operation,
wherein the arousing alert includes at least either one of a number of groups of users hidden outside the screen and reception numbers imparted to the users hidden outside the screen.

3. The turn management system according to claim 1 or 2, configured such that a terminal device and a management server are connectable through a network,
wherein the terminal device includes the display device, the input device, the determination section and the display control section,
wherein the input device further receives input of an addition operation or an update operation to the waiting list,
wherein the management server includes a database that manages the waiting list in the facility, and
wherein, based on the input of the addition operation or the update operation to the waiting list received by the input device, addition or update processing to the waiting list managed in the database is performed, and the display device is made to display a screen including at least a part of the added or updated waiting list.

4. A non-transitory recording medium having a program recorded thereon for making
a computer including a display device for displaying a screen including at least a part of a waiting list and an input device that receives input of a scroll operation of the waiting list, and managing turn waiting of a reservation in a facility function as:
a determination section that determines whether or not a user of a high priority order is to be hidden outside the screen by the scroll operation in a case that the scroll operation is inputted; and
a display control section that displays an arousing alert at the display device in the case that the user of the high priority order is hidden outside the screen by the scroll operation,
wherein the waiting list includes a status of each user waiting for a turn, and
wherein the determination section determines whether or not the user of the high priority order having a specific status is to be hidden outside the screen by the scroll operation.

5. A non-transitory recording medium having a program recorded thereon for making
a computer including a display device for displaying a screen including at least a part of a waiting list and an input device that receives input of a scroll operation of the waiting list, and managing turn waiting of a reservation in a facility function as:
a determination section that determines whether or not a user of a high priority order is to be hidden outside the screen by the scroll operation in a case that the scroll operation is inputted; and
a display control section that displays an arousing alert at the display device in the case that the user of the high priority order is hidden outside the screen by the scroll operation,
wherein the arousing alert includes at least either one of a number of groups of users hidden outside the screen and reception numbers imparted to the users hidden outside the screen.
